# DEMANDE DE BREVET EUROPEEN

(11) **EP 0 881 252 A1**
(43) Date de publication de la demande: **02.12.1998**
(21) Numéro de dépôt: 98109078.0
(22) Date de dépôt: 19.05.1998
(51) Int. Cl.: C08K 3/36, C01B 33/193, C08L 21/00

(54) **Composition de caoutchoc à base de silice destinée à la fabrication d'enveloppes de pneumatiques routiers ayant une résistance au roulement améliorée**

(30) Priorité: 26.05.1997 FR 9706370
(71) Demandeur: Compagnie Générale des Etablissements MICHELIN-MICHELIN & CIE, 63040 Clermont-Ferrand Cedex 09 (FR)
(72) Inventeur: Chevallier, Yvonick, 69270 Fontaines Saint-Martin (FR); Micouin, Jean-Marie, 63140 Chatel-Guyon (FR)
(74) Mandataire: Hiebel, Robert

(57) **Abrégé**

La présente invention a pour objet une composition de caoutchouc destinée à la fabrication d'enveloppes de pneumatiques routiers ayant une résistance au roulement améliorée à base de silice précipitée ayant une surface spécifique relativement élevée et des propriétés de porosité particulières.

## Description

La présente invention concerne de nouvelles compositions de caoutchouc à base de silice précipitée destinées à la fabrication d'enveloppes de pneumatiques routiers ayant une résistance au roulement améliorée.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques tels que par exemple des sous-couches, des gommes de calandrage ou de flancs ou des bandes de roulement et obtenir des pneumatiques routiers (vélo, moto, tourisme, poids-lourd) aux propriétés améliorées, notamment possédant une résistance au roulement réduite.

Pour atteindre un tel objectif de nombreuses solutions ont été proposées consistant notamment à modifier entre autres la nature des polymères et copolymères diéniques en fin de polymérisation au moyen d'agents de couplage ou d'étoilage ou de fonctionnalisation. Toutes ces solutions se sont essentiellement concentrées sur l'utilisation des polymères modifiés avec du noir de carbone comme charge renforçante dans le but d'obtenir une bonne interaction entre le polymère modifié et le noir de carbone. On sait, d'une manière générale, que pour obtenir les propriétés de renforcement optimales conférées par une charge, il convient que cette dernière soit présente dans la matrice élastomère sous une forme finale qui soit à la fois la plus finement divisée possible et répartie de la façon la plus homogène possible. Or, de telles conditions ne peuvent être réalisées que dans la mesure où, d'une part, la charge présente une très bonne aptitude à s'incorporer dans la matrice lors du mélange avec l'élastomère et à se désagréger ou se désagglomérer, et se disperser de façon homogène dans l'élastomère. L'usage de charges blanches renforçantes, et de silice notamment, s'est révélé inapproprié en raison du faible niveau de certaines propriétés de telles compositions et par voie de conséquence de certaines propriétés des pneumatiques mettant en oeuvre ces compositions.

De plus, pour des raisons d'affinités réciproques, les particules de silice ont une fâcheuse tendance, dans la matrice élastomère, à s'agglomérer entre elles. Ces interactions silice/silice ont pour conséquence néfaste de limiter les propriétés de renforcement à un niveau sensiblement inférieur à celui qu'il serait théoriquement possible d'atteindre si toutes les interactions silice/élastomère susceptibles d'être créées pendant l'opération de mélange, étaient effectivement obtenues.

De surcroît, l'usage de la silice soulève des difficultés de mise en oeuvre dues aux interactions silice/silice qui tendent à l'état cru à augmenter la consistance des compositions caoutchouteuses, en tout cas à rendre la mise en oeuvre plus difficile que la mise en oeuvre du noir de carbone.

L'intérêt pour les compositions renforcées à la silice a été relancé récemment avec la publication de la demande de brevet européen EP-A-0 501 227 qui divulgue une composition de caoutchouc vulcanisable au soufre obtenue par travail thermo-mécanique d'un copolymère de diène conjugué et d'un composé vinyle aromatique préparé par polymérisation en solution avec 30 à 150 parties en poids pour 100 parties en poids d'élastomère d'une silice précipitée particulière. L'utilisation d'une telle silice a certes réduit les difficultés de mise en oeuvre des mélanges la contenant, à titre majoritaire ou non, à titre de charge renforçante mais la mise en oeuvre de telles compositions caoutchouteuses reste néanmoins plus difficile que la mise en oeuvre du noir de carbone.

La présente invention a pour but de réduire encore davantage la résistance au roulement des pneumatiques routiers sans sensiblement dégrader les autres propriétés.

La demanderesse vient de découvrir de manière surprenante que le problème ci-dessus pouvait être résolu par l'emploi à titre de charge renforçante dans des compositions de caoutchoucs diéniques d'une silice précipitée possédant une surface spécifique relativement élevée et des propriétés de porosité particulières.

La présente invention a pour objet une composition de caoutchouc vulcanisable au soufre et destinée à la fabrication d'enveloppes de pneumatiques routiers, à base d'au moins un polymère diénique, caractérisée en ce qu'elle renferme à titre de charge renforçante une silice précipitée possédant :
- une surface spécifique BET comprise entre 185 et 250 m²/g,
- une surface spécifique CTAB comprise entre 180 et 240 m²/g,
- une distribution poreuse telle que le volume poreux V2 constitué par les pores dont le diamètre est compris entre 175 et 275 Å représente moins de 50 % du volume poreux V1 constituée par les pores de diamètres inférieurs ou égaux à 400 Å,
- un volume poreux (V_{d1}) constitué par les pores de diamètre inférieur à 1 µm supérieur à 1,65 cm3/g,
- un indice de finesse (I.F.) compris entre 70 et 100 Å.
- un taux de fines (τ_{f}), après désagglomération aux ultra-sons, d'au moins 50 %.

La silice possède une surface spécifique relativement élevée. Sa surface spécifique BET est comprise entre 185 et 250 m²/g, de préférence entre 195 et 225 m²/g, en particulier entre 200 et 220 m²/g ; sa surface spécifique CTAB est comprise entre 180 et 240 m²/g, de préférence entre 185 et 220 m²/g, en particulier entre 190 et 205 m²/g.

Elle présente en général un rapport surface spécifique BET/surface spécifique CTAB variant entre 1,0 et 1,2, c'est-à-dire une faible microporosité.

Une des caractéristiques de la silice précipitée réside dans la distribution, ou répartition du volume poreux, et notamment dans la distribution du volume poreux qui est généré par les pores de diamètres inférieurs ou égaux à 400 Å. La silice possède une distribution poreuse telle que le volume poreux constitué par les pores dont le diamètre est compris entre 175 et 275 Å représente moins de 50 %, en particulier au plus 48 %, et notamment entre 25 et 45%, du volume poreux constitué par les pores de diamètres inférieurs ou égaux à 400 Å. Selon une variante préférentielle la distribution poreuse est telle que le rapport V₂/V₁ est compris entre 0,25 et 0,45.

La silice présente un volume poreux (V_{d1}) constitué par les pores de diamètre inférieur à 1 µm supérieur à 1,65 cm³/g ; ce volume poreux est, de préférence, d'au moins 1,70 cm³/g, en particulier compris entre 1,70 et 1,80 cm³/g.

De préférence, la silice possède un volume poreux (V3) constitué par les pores dont le diamètre est compris entre 100 et 300 Å, qui est d'au moins 0,82 cm³/g, en particulier d'au moins 0,85 cm³/g ; il est habituellement d'au moins 0,86 cm³/g.

La silice possède, en général, un volume poreux total (VPT) supérieur à 3,0 cm³/g, par exemple compris entre 3,1 et 3,4 cm³/g et son indice de finesse (I.F.) est compris entre 70 et 100 Å, de préférence entre 80 et 100 Å, par exemple entre 82 et 98 Å.

La silice mise en oeuvre dans la composition conforme à l'invention possède ainsi des caractéristiques de porosité particulières qui lui confère une aptitude à la dispersion (dispersibilité) très satisfaisante, c'est-à-dire qu'il s'agit d'une silice hautement dispersible. Ainsi, elle présente un taux de fines (τ_{f}) ou taux de particules de taille inférieure à 0,3 µm, après désagglomération aux ultra-sons, d'au moins 50 %, de préférence d'au moins 55 %; ce taux peut être, par exemple, d'au moins 60 %.

En général, son facteur de désagglomération aux ultra-sons (F_{D}) est supérieur à 5,5 ml, en particulier supérieur à 9 ml, voire à 13 ml, et elle peut présenter un diamètre médian (⌀₅₀), après désagglomération aux ultra-sons, inférieur à 8,5 µm, en particulier compris entre 5 et 7 µm.

La silice mise en oeuvre dans la composition conforme à l'invention possède habituellement un PH compris entre 6,0 et 7,5, notamment entre 6,3 et 6,9.

Sa densité de remplissage à l'état tassé (DRT) est, en général, supérieure à 0,26, en particulier à 0,28 ; elle est par exemple au moins égale à 0,30.

La silice possède une prise d'huile DOP variant, le plus souvent, entre 230 et 330 ml/100g, de préférence entre 240 et 300 ml/100 g.

Elle peut se présenter sous forme de poudre, de granulés ou, de manière avantageuse, sous forme de billes sensiblement sphériques.

Les poudres de silice présentent préférentiellement une taille moyenne d'au moins 15 µm ; celle-ci est par exemple comprise entre 15 et 60 µm (notamment entre 20 et 45 µm) ou entre 30 et 150 µm (notamment entre 45 et 120 µm).

Les billes sensiblement sphériques présentent préférentiellement une taille moyenne d'au moins 80 µm et plus préférentiellement la taille moyenne des billes est d'au moins 100 µm, par exemple d'au moins 150 µm ; elle est généralement d'au plus 300 µm. Cette taille moyenne est déterminée selon la norme NF X 11507 (décembre 1970) par tamisage à sec et détermination du diamètre correspondant à un refus cumulé de 50 %.

La surface spécifique CTAB est déterminée selon la méthode NFT 45007 de novembre 1987. La surface spécifique BET est déterminée selon la méthode de BRUNAUER, EMMET, TELLER décrite dans 〈〈 The Journal of the American Chemical Society, vol. 80, page 309 (1938) 〉〉 correspondant à la norme NFT 45007 de novembre 1987. La prise d'huile DOP est déterminée selon la norme NFT 30-022 (mars 1953) en mettant en oeuvre le dioctylphtalate.

Les volumes poreux donnés sont mesurés par porosimétrie au mercure ; la préparation de chaque échantillon se fait comme suit : chaque échantillon est préalablement séché pendant 2 heures en étuve à 200°C , puis placé dans un récipient à essai dans les 5 minutes suivant sa sortie de l'étuve et dégazé sous vide, par exemple à l'aide d'une pompe à tiroirs rotatifs ; les diamètres de pores étant calculés par la relation de WASHBURN avec un angle de contact théta égal à 140° et une tension superficielle gamma égale à 484 Dynes/cm (porosimètre MICROMETRICS 9300).

L'indice de finesse (I.F.) représente le rayon médian des pores intra-agrégats, c'est-à-dire le rayon des pores auquel correspond la surface de pores Sₒ/2 mesurée par porosimétrie au mercure (Sₒ est la surface apportée par tous les pores dont le diamètre est supérieur ou égal à 100 Å).

L'aptitude à la dispersion (dispersibilité) des silices est quantifiée à l'aide de la mesure du taux de fines (τ_{f}), c'est-à-dire de la proportion (en poids) de particules de taille inférieure à 0,3 µm, après désagglomération aux ultra-sons, effectuée selon le test de dispersibilité décrit ci-après.

Dans ce test, on mesure l'aptitude à la dispersion de la silice par une mesure granulométrique (par sédimentation), effectuée sur une suspension de silice préalablement désagglomérée par ultra-sonification. La désagglomération (ou dispersion) sous ultra-sons est mise en oeuvre à l'aide d'un sonificateur VIBRACELL BIOBLOCK (600 W), équipé d'une sonde de diamètre 19 mm. La mesure granulométrique est effectuée à l'aide d'un granulomètre SEDIGRAPH (sédimentation dans le champ de gravité + balayage par faisceau de rayons X).

On pèse dans un pilulier (de volume égal à 75 ml) 4 grammes de silice et l'on complète à 50 grammes par ajout d'eau permutée : on réalise ainsi une suspension aqueuse à 8 % de silice qui est homogénéisée pendant 2 minutes par agitation magnétique. On procède ensuite à la désagglomération (dispersion) sous ultra-sons comme suit : la sonde étant immergée sur une longueur de 4 cm, on règle la puissance de sortie de manière à obtenir une déviation de l'aiguille de puissance indiquant 20 %. La désagglomération est effectuée pendant 210 secondes.

On réalise ensuite la mesure granulométrique au moyen d'un granulomètre SEDIGRAPH. Pour cela, on règle tout d'abord la vitesse de balayage vertical de la cellule par le faisceau de rayons X à 918, ce qui correspond à une taille maximale analysée de 85 µm. On fait circuler de l'eau permutée dans ladite cellule, puis on règle le zéro électrique et le zéro mécanique de l'enregistreur papier (ce réglage se faisant avec le potentiomètre 〈〈 100 % 〉〉 de l'enregistreur à la sensibilité maximale). Le crayon de l'enregistreur papier est placé au point représentant la taille de départ de 85 µm. On fait ensuite circuler la suspension de silice désagglomérée, éventuellement refroidie au préalable, dans la cellule du granulomètre SEDIGRAPH (l'analyse granulométrique s'effectuant à 30°C) et l'analyse démarre alors. L'analyse s'arrête automatiquement dès que la taille de 0,3 µm est atteinte (environ 45 minutes). On calcule alors le taux de fines (τ_{f}), c'est-à-dire la proportion (en poids) de particules de taille inférieure à 0,3 µm.

Ce taux de fines (τ_{f}), ou taux de particules de taille inférieure à 0,3 µm, est d'autant plus élevé que la silice présente une dispersibilité élevée.

Dans certains cas, l'aptitude à la dispersion (et à la désagglomération) des silices peut être également quantifiée au moyen d'un test spécifique de désagglomération.

Le test de désagglomération est réalisé selon le protocole suivant :

la cohésion des agglomérats est appréciée par une mesure granulométrique (par diffraction laser), effectuée sur une suspension de silice préalablement désagglomérée par ultra-sonification ; on mesure ainsi l'aptitude à la désagglomération de la silice (rupture des objets de 0,1 à quelques dizaines de microns). La désagglomération sous ultra-sons est effectuée à l'aide d'un sonificateur VIBRACELL BIOBLOCK (600 W), équipé d'une sonde de diamètre 19 mm. La mesure granulométrique est effectuée par diffraction laser sur un granulomètre SYMPATEC.

On pèse dans un pilulier (hauteur : 6 cm et diamètre : 4 cm) 2 grammes de silice et l'on complète à 50 grammes par ajout d'au permutée : on réalise ainsi une suspension aqueuse à 4 % de silice qui est homogénéisée pendant 2 minutes par agitation magnétique. On procède ensuite à la désagglomération sous ultra-sons comme suit : la sonde étant immergée sur une longueur de 4 cm, on règle la puissance de sortie de manière à obtenir une déviation de l'aiguille du cadran de puissance indiquant 20 %). La désagglomération est effectuée pendant 420 secondes. On réalise ensuite la mesure granulométrique après avoir introduit dans la cuve du granulomètre un volume (exprimé en ml) connu de la suspension homogénéisée.

La valeur du diamètre médian ⌀₅₀ que l'on obtient est d'autant plus faible que la silice présente une aptitude à la désagglomération élevée. On détermine également le rapport (10 x volume de suspension introduite (en ml)/densité optique de la suspension détectée par le granulomètre (cette densité optique est de l'ordre de 20). Ce rapport est indicatif du taux de particules de taille inférieure à 0,1 µm qui ne sont pas détectées par le granulomètre. Ce rapport appelé facteur de désagglomération aux ultra-sons (F_{D}) est d'autant plus élevé que la silice présente une aptitude à la désagglomération élevée.

La silice mise en oeuvre dans la composition conforme à l'invention est obtenue selon un procédé de préparation de silice précipitée du type comprenant la réaction d'un silicate avec un agent acidifiant ce par quoi l'on obtient une suspension de silice précipitée, puis la séparation et le séchage de cette suspension, dans lequel :
- la précipitation est réalisée de la manière suivante :
   (i) on forme un pied de cuve initial comportant au moins une partie de la quantité totale du silicate engagé dans la réaction et au moins un électrolyte, la concentration en silicate (exprimée en SiO₂) dans ledit pied de cuve initial étant comprise entre 50 et 60 g/l,
   (ii) on ajoute l'agent acidifiant audit pied de cuve jusqu'à l'obtention d'une valeur du pH du milieu réactionnel compris entre 7 et 8,5,
   (iii) on ajoute au milieu réactionnel de l'agent acidifiant et, le cas échéant, simultanément la quantité restante du silicate,
- la séparation comprend une filtration et un lavage au moyen d'un filtre équipé d'un moyen de compactage,
- on sèche par atomisation une suspension présentant un taux de matière sèche inférieure à 17 % en poids.

Une certaine concentration en silicate, relativement faible, exprimée en SiO₂ dans le pied de cuve initial, combinée à l'utilisation d'un filtre équipé d'un moyen de compactage, de préférence à une faible pression de compactage, et à un taux approprié de matière sèche de la suspension à sécher constituaient des conditions importantes pour conférer aux silices mises en oeuvre dans la composition conforme à l'invention leurs bonnes propriétés.

Le choix de l'agent acidifiant et du silicate se fait d'une manière bien connue en soi.

On peut rappeler que l'on utilise généralement comme agent acidifiant un acide minéral fort tel que l'acide sulfurique, l'acide nitrique ou l'acide chlorhydrique, ou un acide organique tel que l'acide acétique, l'acide formique ou l'acide carbonique.

L'agent acidifiant peut être dilué ou concentré ; sa normalité peut être comprise entre 0,4 et 8 N, par exemple entre 0,6 et 1,5 N.

En particulier, dans le cas où l'agent acidifiant est l'acide sulfurique, sa concentration peut être comprise entre 40 et 180 g/l, par exemple entre 60 et 130 g/l.

On peut par ailleurs utiliser en tant que silicate toute forme courante de silicates tels que métasilicates, disilicates et avantageusement un silicate de métal alcalin, notamment le silicate de sodium ou de potassium.

Le silicate peut présenter une concentration exprimée en silice comprise entre 40 et 330 g/l, par exemple entre 65 et 300 g/l, en particulier entre 60 et 250 g/l.

De manière générale, on emploie, comme agent acidifiant, l'acide sulfurique, et, comme silicate, le silicate de sodium.

Dans le cas où l'on utilise le silicate de sodium, celui-ci présente, en général, un rapport pondéral SIO₂/Na₂O compris entre 2 et 4, par exemple entre 3,0 et 3,7.

En ce qui concerne plus particulièrement la précipitation, celle-ci se fait d'une manière spécifique selon les étapes suivantes :

On forme tout d'abord un pied de cuve qui comprend du silicate ainsi qu'un électrolyte (étape (i)). La quantité de silicate présente dans le pied de cuve initial ne représente avantageusement qu'une partie de la quantité totale de silicate engagée dans la réaction.

La concentration en silicate dans le pied de cuve initial est comprise entre 50 et 60 g de SiO₂ par litre. De préférence, cette concentration est comprise entre 55 et 60 g/l.

Le pied de cuve initial comprend un électrolyte. Le terme d'électrolyte s'entend ici dans son acceptation normale, c'est-à-dire qu'il signifie toute substance ionique ou moléculaire qui, lorsqu'elle est en solution, se décompose ou se dissocie pour former des ions ou des particules chargées. On peut citer comme électrolyte un sel du groupe des sels des métaux alcalins et alcalino-terreux, notamment le sel du métal de silicate de départ et de l'agent acidifiant, par exemple le chlorure de sodium dans le cas de la réaction d'un silicate de sodium avec l'acide chlorhydrique ou, de préférence, le sulfate de sodium dans le cas de la réaction d'un silicate de sodium avec l'acide sulfurique.

Si l'électrolyte employé est du sulfate de sodium, sa concentration dans le pied de cuve initial est, de préférence, entre 12 et 20 g/l, en particulier entre 15 et 20 g/l.

La deuxième étape consiste à ajouter l'agent acidifiant dans le pied de cuve de la composition décrite plus haut (étape (ii)).

Cette addition qui entraîne une baisse corrélative du pH du milieu réactionnel se fait jusqu'à ce qu'on atteigne une valeur de pH comprise entre 7 et 8,5 ; notamment entre 7 et 8, par exemple entre 7,5 et 8.

Une fois qu'est atteinte la valeur souhaitée de pH, on procède alors à la troisième étape (étape (iii)).

Dans le cas (préféré) d'un pied de cuve de départ ne comprenant qu'une partie de la quantité totale de silicate engagé dans la réaction on procède, dans l'étape (iii), à une addition simultanée d'agent acidifiant et de la quantité restante de silicate.

Cette addition simultanée est de préférence réalisée de manière telle que la valeur du pH soit constamment égale à (± 0,2 près) à celle atteinte à l'issue de l'étape (ii).

En général, dans une étape suivante on ajoute au milieu réactionnel une quantité supplémentaire d'agent acidifiant, de préférence jusqu'à l'obtention d'une valeur du pH du milieu réactionnel compris entre 4 et 6, en particulier ente 4,5 et 5,5.

Il peut être avantageux d'effectuer, après cette addition d'une quantité supplémentaire d'agent acidifiant, un mûrissement du milieu réactionnel, ce mûrissement pouvant par exemple durer de 1 à 30 minutes, notamment de 2 à 15 minutes.

Dans le cas d'un pied de cuve de départ comprenant la quantité totale du silicate engagé dans la réaction, on procède, dans l'étape (iii), à une addition d'agent acidifiant, de préférence jusqu'à l'obtention d'une valeur du pH du milieu réactionnel comprise entre 4 et 6, en particulier entre 4,5 et 5,5.

Il peut être également avantageux d'effectuer, après cette étape (iii), un mûrissement du milieu réactionnel, ce mûrissement pouvant par exemple durer de 1 à 30 minutes, notamment de 2 à 15 minutes.

La température du milieu réactionnel est généralement comprise entre 68 et 98°C.

Selon une variante, la réaction est effectuée à une température constante, de préférence comprise entre 75 et 95°C.

Selon une autre variante, la température de fin de réaction est plus élevée que la température de début de réaction ; ainsi, on maintient la température au début de la réaction de préférence entre 68 et 80°C, puis on augmente la température, de préférence jusqu'à une valeur compris entre 80 et 98°C, valeur à laquelle elle est maintenue jusqu'à la fin de la réaction.

On obtient, à l'issue des étapes qui viennent d'être décrite, une bouillie de silice qui est ensuite séparée (séparation liquide-solide).

La séparation comprend une filtration et un lavage à l'aide d'un filtre équipé d'un moyen de compactage, la pression de compactage étant de préférence faible.

Ce filtre peut être un filtre à bande équipé d'un rouleau assurant le compactage.

Néanmoins, de préférence, la séparation comprend une filtration, un lavage puis un compactage, au moyen d'un filtre presse ; en général, la pression en fin de filtration est comprise entre 3,5 et 6,0 bars, par exemple entre 3,8 et 4,5 bars ; de manière très avantageuse, ledit compactage est effectué par introduction d'air à une pression inférieure à 4,5 bars, en particulier comprise entre 3,8 et 4,3 bars, pendant 20 à 40 secondes, par exemple pendant environ 30 secondes.

La suspension de silice précipitée ainsi récupérée (gâteau de filtration) est ensuite séchée par atomisation.

La suspension doit présenter immédiatement avant son séchage par atomisation un taux de matière sèche inférieure à 17 % en poids. Ce taux de matière sèche est de préférence compris entre 14,5 et 16,5 % en poids.

Il est à noter que l'on peut en outre, après la filtration, à une étape ultérieure du procédé, rajouter au gâteau de filtration de la matière sèche, par exemple de la silice sous forme pulvérulente.

Le séchage peut être mis en oeuvre au moyen de tout type d'atomiseur convenable, notamment un atomiseur à turbine, à buses, à pression liquide ou à deux fluides.

Il y a lieu de noter que le gâteau de filtration n'est pas toujours dans des conditions permettant une atomisation notamment à cause de sa viscosité élevée. D'une manière connue en soi, on soumet alors le gâteau à une opération de délitage. Cette opération peut être réalisée par passage du gâteau dans un broyeur de type colloïdal ou à bille. Le délitage est généralement effectué en présence d'un composé de l'aluminium, en particulier d'aluminate de sodium et; de préférence, en présence d'un agent acidifiant tel que décrit précédemment (dans ce dernier cas, le composé de l'aluminium et l'agent acidifiant sont avantageusement ajoutés de manière simultanée). L'opération de délitage permet notamment d'abaisser la viscosité de la suspension à sécher ultérieurement.

Le séchage est effectué à l'aide d'un atomiseur à buses. La silice précipitée susceptible d'être alors obtenue se présente avantageusement sous forme de billes sensiblement sphériques de préférence d'une taille moyenne d'au moins 80 µm, par exemple d'au moins 100 µm.

A l'issue du séchage, on peut procéder à une étape de broyage sur le produit récupéré. La silice précipitée qui est alors susceptible d'être obtenue se présente généralement sous forme d'une poudre, de préférence de taille moyenne d'au moins 15 µm, en particulier comprise entre 15 et 60 µm, par exemple entre 20 et 45 µm.

Les produits broyés à la granulométrie désirée peuvent être séparés des éventuels produits non conformes au moyen par exemple de tamis vibreux présentant des tailles de maille appropriées, et les produits non conformes ainsi récupérés être renvoyés au broyage.

Le séchage peut aussi être effectué à l'aide d'un atomiseur à turbine. La silice précipitée susceptible d'être alors obtenue peut se présenter sous la forme d'une poudre, de préférence de taille moyenne

Par polymères diéniques susceptibles d'être mis en oeuvre dans les compositions conformes à l'invention, on entend tout homopolymère obtenu par polymérisation d'un monomère diène conjugué ayant de 4 à 12 atomes de carbone, tout copolymère obtenu par copolymérisation d'un ou plusieurs diènes conjugués entre eux ou avec un ou plusieurs composés vinyle aromatique ayant de 8 à 20 atomes de carbone. A titre de diènes conjugués conviennent notamment le butadiène-1,3, le 2-méthyl-1,3-butadiène, les 2,3-di(alcoyle en C₁ à C₅)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, etc...

A titre de composés vinyle aromatique conviennent notamment le styrène, l'ortho-, meta, para-méthylstyrène, le mélange commercial "vinyle-toluène", le para-tertiobutyl-styrène, les méthoxy-styrènes, les chloro-styrènes, le vinyle mésitylène, le divinyle benzène, le vinyle naphtalène, etc...

Les copolymères peuvent contenir entre 99 % et 20 % en poids d'unités diéniques et de 1 % à 80 % en poids d'unités vinyle aromatiques. Les polymères peuvent avoir toute microstructure qui est fonction des conditions de polymérisation utilisées, notamment de la présence ou non d'un agent modifiant et/ou randomisant et des quantités d'agent modifiant et/ou randomisant employées. Les polymères peuvent être à blocs, statistiques, séquencés, microséquencés, etc... et être préparés en dispersion ou en solution.

A titre préférentiel conviennent les polybutadiènes et en particulier ceux ayant une teneur en unités-1,2 comprise entre 4 % et 80 % et ceux ayant plus de 90 % de liaisons Cis-1,4, les polyisoprènes, les copolymères de butadiène-styrène et en particulier ceux ayant une teneur en styrène comprise entre 5% et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %, ceux ayant une teneur globale en composé aromatique comprise entre 5 % et 50 % et une température de transition vitreuse (Tg) comprise entre 0 °C et - 80 °C et particulièrement ceux ayant une teneur en styrène comprise entre 25 % et 30 % en poids, une teneur en liaisons vinyliques de la partie butadiénique comprise entre 55 % et 65 %, une teneur en liaisons trans-1,4 comprise entre 20 % et 25 % et une température de transition vitreuse comprise entre - 20 °C et - 30 °C.

Dans le cas de copolymères de butadiène-styrène-isoprène conviennent ceux ayant une teneur en styrène comprise entre 5 et 50 % et plus particulièrement comprise entre 10 % et 40 %, une teneur en isoprène comprise entre 15 % et 60 % en poids et plus particulièrement comprise entre 20 % et 50 % en poids, une teneur en butadiène comprise entre 5 et 50 % et plus particulièrement comprise entre 20 % et 40 % en poids, une teneur en unités-1,2 de la partie butadiénique comprise entre 4% et 85%, une teneur en unités trans-1,4 de la partie butadiénique comprise entre 6 % et 80 %, une teneur en unités-1,2 plus 3,4 de la partie isoprénique comprise entre 5 % et 70 % et une teneur en unités trans-1,4 de la partie isoprénique comprise entre 10 % et 50 %.

Bien entendu, le polymère diénique peut être couplé et/ou étoilé ou encore fonctionnalisé avec un agent de couplage et/ou d'étoilage ou de fonctionnalisation.

Les compositions conformes à l'invention contiennent outre un ou plusieurs polymères diénique et la silice, tout ou partie des autres constituants et additifs habituellement utilisés dans les mélanges de caoutchouc comme des plastifiants, pigments, antioxydants, du soufre, des accélérateurs de vulcanisation, des huiles d'extension, un ou des agents de couplage (ou de liaison) de silice, et/ou un ou des agents de recouvrement de la silice tels que des alcoxysilanes, polyols, amines, etc...

De manière imprévisible pour l'homme de l'art, il a été découvert que l'utilisation à titre de charge renforçante de la silice ayant les caractéristiques définies ci-dessus possédant une surface spécifique relativement élevée, c'est-à-dire plus élevée que la silice mise en oeuvre dans les exemples de la demande de brevet européen EP-A-0.501.227 et des propriétés de porosité particulières ainsi qu'un mode opératoire particulier consistant à soumettre ladite silice dans un premier stade à un travail thermo-mécanique avec l'élastomère diénique puis dans un second stade à soumettre le mélange obtenu à l'issue du premier stade avec au moins un agent de couplage à deux étapes de travail thermo-mécanique, confère aux compositions de caoutchouc à base d'au moins un polymère diénique synthétique des propriétés de mise en oeuvre comparables à celles d'une silice de moindre finesse, ce qui rend ces compositions particulièrement utiles pour la fabrication de produits semi-finis, notamment des bandes de roulement, des sous-couches, des gommes de flancs, des gommes de calandrage, utilisables comme constituants de pneumatiques routiers possèdant une résistance au roulement réduite.

Ainsi, la présente invention a également pour objet des constituants semi-finis utilisables dans la fabrication de pneumatiques routiers, notamment des bandes de roulement, ainsi que des pneumatiques routiers possédant une résistance au roulement améliorée obtenus par la mise en oeuvre d'une composition de caoutchouc selon l'invention.

L'invention a également pour objet un procédé pour améliorer les propriétés hystérétiques de compositions de caoutchoucs diéniques vulcanisables au soufre et destinées à la fabrication d'enveloppes de pneumatiques routiers ayant une résistance au roulement améliorée comprenant de la silice à titre de charge renforçante caractérisé, en ce qu'il consiste à renforcer lesdites compositions avec une silice précipitée possédant les caractéristiques suivantes :
- une surface spécifique BET comprise entre 185 et 250 m²/g,
- une surface spécifique CTAB comprise entre 180 et 240 m²/g,
- une distribution poreuse telle que le volume poreux V2 constitué par les pores dont le diamètre est compris entre 175 et 275 Å représente moins de 50 % du volume poreux V1 constituée par les pores de diamètres inférieurs ou égaux à 400 Å,
- un volume poreux (V_{d1}) constitué par les pores de diamètre inférieur à 1 µm supérieur à 1,65 cm3/g,
- un indice de finesse (I.F.) compris entre 70 et 100 Å,
- un taux de fines (τ_{f}), après désagglomération aux ultra-sons, d'au moins 50 %,
et à effectuer un travail thermo-mécanique en plusieurs stades, le premier stade consistant à effectuer par travail thermo-mécanique, le mélangeage de l'élastomère et de la silice, le second stade consistant à effectuer plusieurs étapes de mélangeage par travail thermo-mécanique du mélange obtenu à l'issue du premier stade avec au moins un agent de couplage.

Selon une forme d'exécution préférentielle, le nombre d'étapes ultérieures est de 2 et la température maximale de tombée du mélange est comprise entre 140°C et 180°C, et plus préférentiellement 160°C. Ce travail thermo-mécanique est réalisé comme connu en soi selon la méthode décrite dans la demande de brevet européen EP-A-0 501 227, incorporée dans la présente demande.

Comme agents de couplage conviennent tous les agents connus et en particulier les organosilanes polysulfurés, préférentiellement ceux commercialisés par la Société Degussa, sous les dénominations SI69 et X50S.

L'effet bénéfique maximal est obtenu lorsque la silice présentant les caractéristiques particulières ci-dessus définies constitue la totalité de la charge renforçante. Un effet bénéfique est également obtenu lorsque la silice est utilisée à titre majoritaire ou encore lorsqu'elle est utilisée en coupage avec des silices précipitées de l'art antérieur ou avec d'autres charges blanches.

L'effet bénéfique est obtenu quel que soit l'état physique sous lequel se présente la silice, c'est-à-dire qu'elle se présente sous forme de poudre, de microperles, de granulés, de billes.

La composition de caoutchouc conforme à l'invention est particulièrement adaptée pour la fabrication de bandes de roulement de pneumatiques routiers destinés en particulier à équiper des véhicules de tourisme, des poids lourds, des camionnettes, des motos et des vélos.

L'invention est illustrée à titre non limitatif par l'exemple suivant qui ne saurait constituer une limitation de la portée de l'invention.

Les propriétés des compositions sont évaluées comme suit :
- Viscosité Mooney ML (1+4) à 100 °C : mesurée selon la norme ASTM D-1646
- Dureté Shore A : mesures effectuées selon la norme DIN 53505
- Modules d'allongement à 300 % (MA 300), 100 % (MA100) : mesures effectuées selon la norme ISO 37
- Indices de cassage Scott : mesurés à 23 °C
   Force rupture (FR) en Mpa
   Allongement à la rupture (AR) en %
- Pertes hystérétiques (PH) : mesurées par rebond à 23 °C et à 60°C selon la norme ISO R17667 et exprimées en %
- Résistance au roulement (RR) : mesurée sur volant selon la méthode ISO 87-67
- Durée de vie moyenne sur usure (DVM) : l'usure est déterminée par la mesure de la perte de matière correspondant à une réduction de hauteur de la bande de roulement de respectivement 0,18 mm puis de 0,35 mm/1 000 km parcourus.

Le résultat consigné dans le tableau est la demi-somme des 2 valeurs mesurées de résistance à l'usure. La valeur de référence est 100, une valeur > à 100 indique une amélioration de la résistance à l'usure.

### Exemple

Cet exemple a pour but de comparer deux compositions de caoutchouc diénique identiques à l'exception de la silice utilisée qui, dans le cas de l'essai 1, est une silice de surface spécifique relativement élevée et possédant des propriétés de porosité particulières soumise à un travail thermo-mécanique en 3 étapes et dans le cas de l'essai 2 qui est l'essai témoin, est une silice selon l'art antérieur.

Les caractéristiques des constituants sont les suivantes :
- SBR solution : copolymère de butadiène-styrène préparé en solution selon le procédé décrit dans la demande de brevet français n° 2 295 972, ayant une teneur en styrène de 26 %, une teneur en liaisons vinyliques de 60 %, une teneur en liaisons trans-1,4 de 22 % et en liaisons Cis-1,4 de 18 %, une Tg de - 25 °C et soumis à un étoilage avec du diéthylène glycol selon le procédé décrit dans le brevet français 2 053 786.
- Le polybutadiène (PB) est un polybutadiène ayant 93 % de liaisons Cis-1,4 obtenu par le procédé décrit dans le brevet français n° 1 436 607.
- Antioxydant : N-(1,3-diméthylbutyl)-N'-phényl-p-phénylènediamine.
- Paraffine : mélange de cires macro et microcristallines.
- Sulfénamide : n-cyclohexyl-2-benzothiazyl-sulfénamide.
- Agent de couplage : mélange dans le rapport 1 : 1 de noir de carbone N 330 et d'organosilane polysulfuré commercialisé par Degussa sous la référence X 50S.
- Silice de l'essai 2 selon l'art antérieur : BET 152 m²/g ; CTAB : 150 m²/g ; D50 4,5 µm; F_{D} 8 ml ; commercialisée par la Société Rhône Poulenc sous la dénomination commerciale Z1165.
- Silice de l'essai 1 : BET 216 m²/g ; CTAB 192 m²/g ; DOP 295 ml/100 g.
- Huile aromatique d'extension.

La silice de l'essai 1 est obtenue selon le procédé décrit ci-dessous :

Dans un réacteur en acier inoxydable muni d'un système d'agitation par hélices et d'un chauffage par double enveloppe, on introduit :
- 275 litres de silicate de sodium aqueux (65°C), présentant un rapport pondéral SiO₂/Na₂O égal à 3,45 et une densité à 20° C égal à 1,230.
- 825 titres de solution aqueuse (20°C) contenant 18,2 kg de Na₂O₄.

La concentration en silicate exprimée en SiO₂ dans le pied de cuve initial est alors de 58 g/l. Le mélange est alors porté à une température de 74°C tout en le maintenant sous agitation. On y introduit alors, à un débit de 7,6 l/mn d'acide sulfurique dilué de densité à 20°C égale à 1,050 jusqu'à obtenir dans le milieu réactionnel une valeur de pH (mesurée à sa température) égale à 7,7. La température de la réaction est de 74°C pendant les 25 premières minutes ; elle est ensuite portée de 74 à 94°C en 10 minutes environ, puis maintenue à 94°C jusqu'à la fin de la réaction.

On introduit ensuite (c'est-à-dire lorsque le pH du milieu réactionnel a atteint a valeur de 7,7) conjointement dans le milieu réactionnel du silicate de sodium aqueux du type décrit ci-avant, à un débit de 2,1 l/mn, et de l'acide sulfurique, également du type décrit ci-avant à un débit régulé de manière telle que le pH du milieu réactionnel pendant la période d'introduction, soit constamment égal à 7,7 ± 0,1. Après 40 minutes d'addition simultanée, on arrête l'introduction du silicate de sodium et on continue à introduire de l'acide dilué pendant 10 minutes environ de manière à amener le pH du milieu réactionnel à une valeur égale à 5,2. Après cette introduction d'acide, on maintient la bouillie réactionnelle obtenue pendant 5 minutes sous agitation.

La durée totale de la réaction est de 98 minutes.

On obtient ainsi une bouillie ou suspension de silice précipitée qui est ensuite filtrée et lavée au moyen d'un filtre presse à plateaux verticaux, lesdits plateaux étant équipés de membrane déformable permettant de comprimer le gâteau de filtration par introduction d'air sous pression ; la bouillie de silice précipitée est tout d'abord filtrée, la pression en fin de filtration étant de 5,6 bars ; le gâteau formé est ensuite lavé à l'eau, puis est compacté par introduction d'air à la pression de 4 bars pendant 30 secondes.

Le gâteau obtenu est ensuite fluidifié par action mécanique et chimique (ajout simultané d'acide sulfurique et d'une quantité d'aluminate de sodium correspond à un rapport pondéral Al/SiO₂ de 0,28 %). Après cette opération de délitage, la bouillie résultante, de pH égal à 6,2 et de perte au feu égale à 83,7 % (donc un taux de matière sèche de 16,3 % en poids) est atomisée au moyen d'un atomiseur à buses.

Les caractéristiques de la silice obtenue sous forme de billes sensiblement sphériques sont alors les suivantes :

| | |
|---|---|
| - surface spécifique BET | 216 m²/g |
| - surface spécifique CTAB | 192 m²/g |
| - volume poreux V1 représenté par les pores de d ≤ 400 Å | 0,97 cm³/g |
| - volume poreux V2 représenté par les pores 175 Å ≤ d ≤ 275 Å | 0,34 cm³/g |
| - rapport V2/V1 | 0,35 |
| - volume poreux (V_{d1}) constitué par les pores de d < 1 µm | 1,73 cm³/g |
| - indice de finesse (I.F.) | 87 Å |
| - volume poreux V3 représenté par les pores 100 Å ≤ d ≤ 300 Å | 0,86 cm³/g |
| volume poreux total (VPT) | 3,15 cm³/g |
| - DRT | 0,30 |
| - prise d'huile DOP | 295 ml/100 g |
| - pH | 6,6 |
| - taille moyenne des particules | 190 µm |
| - ⌀₅₀ (µm) | 5,2 |
| -F_{D} (ml) | 14,4 |

La silice soumise au test de dispersibilité tel que défini auparavant dans la description présente un taux de fines (τ_{f}), c'est-à-dire une proportion de particules de taille inférieure à 0,3 µm, après désagglomération aux ultra-sons, de 57 % et lorsqu'elle est soumise au test de désagglomération aux ultra-sons tel que défini précédemment dans la description : présente un diamètre médian (⌀₅₀) de 5,2 µm et un facteur de désagglomération aux ultra-sons (F_{D}) de 14,4 ml.

La composition de l'essai 1 est obtenue par mise en oeuvre, dans un premier stade dans un mélangeur interne, pour une vitesse moyenne des palettes de 45 tours par minute jusqu'à atteindre une température maximale de tombée de 160° environ, des élastomères diéniques et de la silice de surface spécifique relativement élevée, puis dans un second stade le mélange obtenu à l'issue de ce premier stade est soumis en présence de l'agent de couplage à un travail thermo-mécanique en deux étapes qui durent respectivement 4 et 5 minutes jusqu'à atteindre une température de tombée de 160°C. Une étape de finition est ensuite effectuée à 65°C sur un mélangeur externe en présence du système de vulcanisation.

La composition de l'essai 2 est obtenue par un travail thermo-mécanique des élastomères diéniques, de la silice et de l'agent de couplage en deux étapes qui durent respectivement 4 et 5 minutes jusqu'à atteindre une température de tombée de 160°C, comme décrit dans la demande de brevet européen EP-A-0501227.

Dans les formulations suivantes toutes les parties sont exprimées en poids :

| **Composition** | **Essai 1** | **Essai 2** |
|---|---|---|
| SBR/PBR | 75/25 | 75/25 |
| Silice Z1165 | | 80 |
| Silice | 80 | |
| Huile aromatique | 30,5 | 30,5 |
| Agent de couplage | 12,8 | 12,8 |
| Acide stéarique | 1,0 | 1,0 |
| Cire anti-ozone | 1,5 | 1,5 |
| Oxyde de zinc | 2,5 | 2,5 |
| Antioxydant | 2,0 | 2,0 |
| Soufre | 1,4 | 1,4 |
| Sulfénamide | 1,7 | 1,7 |
| Diphénylguanidine | 1,5 | 1,5 |

La vulcanisation est effectuée à 150 °C pendant 40 minutes.

On compare entre elles les propriétés et les performances de ces 2 compositions tant à l'état non vulcanisé qu'à l'état vulcanisé avec des pneumatiques à carcasse radiale de dimension 175/70-14 MXT dont la bande de roulement comporte plusieurs secteurs, la moitié d'entre eux comportant des compositions utilisées dans l'essai 1 et l'autre moitié des compositions utilisées dans l'essai 2.

Les résultats sont consignés dans le tableau I.

**TABLEAU I**

| **Composition** | **Essai 1** | **Essai 2** |
|---|---|---|
| | | |

| **Propriétés à l'état non vulcanisé** | | |
|---|---|---|
| Mooney | 84 | 84 |

| **Propriétés à l'état vulcanisé** | | |
|---|---|---|
| Dureté Shore A | 62,7 | 62,9 |
| MA100 | 1,56 | 1,53 |
| MA300 | 1,70 | 1,92 |
| MA300/MA100 | 1,09 | 1,25 |

| **Indices de cassage Scott à :** | | |
|---|---|---|
| 23°C FR | 22,4 | 22,7 |
| 23°C AR% | 660 | 610 |
| PH à 60°C* | 30,8 | 27,8 |
| RR en kg/Tonne | 9,2 | 9,5 |
| DVM | 100 | 100 |

On constate que la composition 1 conforme à l'invention comprenant la silice de surface spécifique relativement élevée et une certaine propriété de porosité et mise en oeuvre en 2 stades présente une bonne dispersion de la silice dans l'élastomère et exhibe une bonne mise en oeuvre de la composition, c'est-à-dire une mise en oeuvre comparable à celle obtenue avec une silice précipitée de moindre finesse, ce qui la rend appropriée pour la fabrication de produits semi-finis. Cette composition possède un indice d'interaction charge-élastomère qui est substantiellement équivalente à celui de la composition de l'essai 2.

On constate par ailleurs qu'elle est particulièrement appropriée pour entrer dans la constitution notamment d'une bande de roulement de pneumatiques routiers car elle conduit à un pneumatique routier ayant une résistance au roulement réduite et ce sans que cette amélioration se fasse au détriment des autres propriétés. Ceci est tout à fait inattendu pour l'homme de l'art qui s'attend avec une charge renforçante plus fine à obtenir d'une part, des propriétés à cru et d'autre part une résistance au roulement dégradées comme on aurait pu le penser concernant cette dernière performance au vu de l'augmentation de la perte hystérétique de la composition 1 par rapport à celle de la composition 2.

## Revendications

1. Composition de caoutchouc vulcanisable au soufre destinée à la fabrication de pneumatiques routiers ayant une résistance au roulement réduite, à base d'au moins un polymère diénique, caractérisée en ce qu'elle renferme à titre de charge renforçante une silice hautement dispersible obtenue par précipitation de la manière suivante :
(i) on forme un pied de cuve initial comportant au moins une partie de la quantité totale du silicate engagé dans la réaction et au moins un électrolyte, la concentration en silicate (exprimée en SiO₂) dans ledit pied de cuve initial étant comprise entre 50 et 60 g/l,
(ii) on ajoute l'agent acidifiant audit pied de cuve jusqu'à l'obtention d'une valeur du pH du milieu réactionnel comprise entre 7 et 8,5,
(iii) on ajoute au milieu réactionnel de l'agent acidifiant et, le cas échéant, simultanément la quantité restante du silicate,
- la séparation comprend une filtration et un lavage à l'aide d'un filtre équipé d'un moyen de compactage,
- on sèche par atomisation une suspension présentant un taux de matière sèche inférieure à 17 % en poids,
et en ce que ladite silice est soumise dans un premier stade à un travail thermo-mécanique avec l'élastomère diénique pour constituer un mélange qui est ensuite soumis avec au moins un agent de couplage dans un second stade à deux étapes de travail thermo-mécanique.

2. Composition selon la revendication 1, caractérisée en ce que ladite concentration en silicate (exprimée en SiO₂) dans ledit pied de cuve est comprise entre 55 et 60 g/l.

3. Composition selon l'une des revendications 1 et 2, caractérisée en ce que ledit électrolyte est du sulfate de sodium, sa concentration dans le pied de cuve initial étant comprise entre 12 et 20 g/l, en particulier entre 15 et 20 g/l.

4. Composition selon l'une des revendications 1 à 3, caractérisée en ce qu'après l'addition simultanée d'agent acidifiant et de la quantité restante de silicate, on ajoute au milieu réactionnel une quantité supplémentaire d'agent acidifiant, de préférence jusqu'à l'obtention d'une valeur du pH du milieu réactionnel compris entre 4 et 6.

5. Composition selon l'une des revendications 1 à 4, caractérisée en ce qu'on sèche par atomisation une suspension présentant un taux de matière sèche compris entre 14,5 et 16,5 % en poids.

6. Composition selon l'une des revendications 1 à 5, caractérisée en ce que la séparation comprend une filtration, un lavage puis un compactage, au moyen d'un filtre presse.

7. Composition selon la revendication 6, caractérisée en ce que ledit compactage est effectué par introduction d'air à une pression inférieure à 4,5 bars pendant 20 à 40 secondes, par exemple pendant environ 30 secondes.

8. Composition selon la revendication 7, caractérisée en ce que ladite pression est comprise entre 3,8 et 4,3 bars.

9. Composition de caoutchouc vulcanisable au soufre, destinée à la fabrication de pneumatiques routiers, à base d'au moins un polymère diénique caractérisé en ce qu'elle renferme à titre de charge renforçante une silice précipitée possédant :
- une surface spécifique BET comprise entre 185 et 250 m²/g,
- une surface spécifique CTAB comprise entre 180 et 240 m²/g,
- une distribution poreuse telle que le volume poreux V2 constitué par les pores dont le diamètre est compris entre 175 et 275 Å représente moins de 50 % du volume poreux V1 constituée par les pores de diamètres inférieurs ou égaux à 400 Å,
- un volume poreux (V_{d1}), constitué par les pores de diamètre inférieur à 1 µm, supérieur à 1,65 cm3/g,
- un indice de finesse (I.F.) compris entre 70 et 100 Å.
- un taux de fines (τ_{f}), après désagglomération aux ultra-sons, d'au moins 50 %.

10. Composition selon la revendication 9, caractérisée en ce que la silice présente une distribution poreuse telle que le rapport V2/V1 est d'au plus 0,48 et plus préférentiellement allant de 0,25 à 0,45.

11. Composition selon l'une quelconque des revendications 9 et 10, caractérisée en ce que la silice présente un diamètre médian (⌀₅₀) après désagglomération aux ultra-sons, inférieur à 8,5 µm, de préférence compris entre 5 et 7 µm.

12. Composition selon l'une quelconque des revendications 9 à 11, caractérisée en ce que la silice possède un facteur de désagglomération aux ultra-sons (F_{D}) supérieur à 5,5 ml, de préférence supérieur à 9 ml.

13. Composition selon l'une quelconque des revendications 9 à 12, caractérisée en ce que la silice possède un volume poreux (V3) constitué par les porcs dont le diamètre est compris entre 100 et 300 Å d'au moins 0,82 cm³/g, préférentiellement d'au moins 0,85 cm³/g.

14. Composition selon l'une quelconque des revendications 9 à 13, caractérisée en ce que la silice possède un volume poreux total (VPT) supérieur à 3,0 cm³/g, par exemple compris entre 3,1 et 3,4 cm³/g.

15. Composition selon l'une quelconque des revendications 1 à 14, caractérisée en ce que le polymère diénique est un copolymère de butadiène-styrène ou un copolymère de butadiène-styrène-isoprène.

16. Composition selon la revendication 15, caractérisée en ce que le copolymère de butadiène-styrène est un copolymère préparé en solution ayant une teneur en styrène comprise entre 25 et 30 % en poids une teneur en liaisons vinyliques de la partie butadiénique comprise entre 55 % et 65 %, une teneur en liaisons trans-1,4 comprise entre 20 % et 25 % et une température de transition vitreuse comprise entre - 20 °C et - 80 °C.

17. Composition selon l'une des revendications 15 ou 16, caractérisée en ce qu'elle contient en outre du polybutadiène ayant plus de 90 % de liaisons Cis-1,4.

18. Procédé pour améliorer les propriétés de résistance au roulement de compositions de caoutchoucs diéniques vulcanisables au soufre et destinées à la fabrication de pneumatiques routiers comprenant de la silice à titre de charge renforçante, caractérisé en ce qu'il consiste à renforcer lesdites compositions avec une silice précipitée possédant:
- une surface spécifique BET comprise entre 185 et 250 m²/g,
- une surface spécifique CTAB comprise entre 180 et 240 m²/g,
- une distribution poreuse telle que le volume poreux V2 constitué par les pores dont le diamètre est compris entre 175 et 275 Å représente moins de 50 % du volume poreux V1 constituée par les pores de diamètres inférieurs ou égaux à 400 Å,
- un volume poreux (V_{d1}), constitué par les pores de diamètre inférieur à 1 µm, supérieur à 1,65 cm3/g,
- un indice de finesse (I.F.) compris entre 70 et 100 Å.
- un taux de fines (τ_{f}), après désagglomération aux ultra-sons, d'au moins 50 %, à soumettre ladite silice dans un premier stade à un travail thermo-mécanique avec l'élastomère diénique puis dans un second stade à soumettre le mélange obtenu à l'issue du premier stade avec au moins un agent de couplage à deux étapes de travail thermo-mécanique.

19. Pneumatique routier ayant une résistance au roulement réduite comprenant une composition de caoutchouc diénique, vulcanisable au soufre, comportant de la silice à titre de charge renforçante, caractérisée en ce que la composition comprend une silice précipitée hautement dispersible possédant:
- une surface spécifique BET comprise entre 185 et 250 m²/g,
- une surface spécifique CTAB comprise entre 180 et 240 m²/g,
- une distribution poreuse telle que le volume poreux V2 constitué par les pores dont le diamètre est compris entre 175 et 275 Å représente moins de 50 % du volume poreux V1 constituée par les pores de diamètres inférieurs ou égaux à 400 Å,
- un volume poreux (V_{d1}), constitué par les pores de diamètre inférieur à 1 µm, supérieur à 1,65 cm³/g,
- un indice de finesse (I.F.) compris entre 70 et 100 Å.
- un taux de fines (τ_{f}), après désagglomération aux ultra-sons, d'au moins 50 %.

20. Pneumatique selon la revendication 19, caractérisée en ce que la silice possède un volume poreux (V3) constitué par les pores dont le diamètre est compris entre 100 et 300 Å d'au moins 0,82 cm³/g, préférentiellement d'au moins 0,85 cm³/g.

21. Pneumatique selon l'une des revendications 19 ou 20, caractérisé en ce que la silice est soumise dans un premier stade à un travail thermo-mécanique avec l'élastomère diénique et en ce que, dans un second stade, le mélange obtenu à l'issue du premier stade est soumis avec au moins un agent de couplage à deux étapes de travail thermo-mécanique.

22. Bande de roulement pour pneumatiques routiers à base d'une composition de caoutchouc diénique, vulcanisable au soufre, comportant de la silice à titre de charge renforçante, caractérisée en ce que la composition comprend une silice précipitée hautement dispersible possédant:
- une surface spécifique BET comprise entre 185 et 250 m²/g,
- une surface spécifique CTAB comprise entre 180 et 240 m²/g,
- une distribution poreuse telle que le volume poreux V2 constitué par les pores dont le diamètre est compris entre 175 et 275 Å représente moins de 50 % du volume poreux V1 constituée par les pores de diamètres inférieurs ou égaux à 400 Å,
- un volume poreux (V_{d1}), constitué par les pores de diamètre inférieur à 1 µm, supérieur à 1,65 cm3/g,
- un indice de finesse (I.F.) compris entre 70 et 100 Å.
- un taux de fines (τ_{f}), après désagglomération aux ultra-sons, d'au moins 50 %.
